# EUROPEAN PATENT APPLICATION

(11) **EP 4 811 404 A1**
(43) Date of publication of application: **23.09.2026**
(21) Application number: 26164695.4
(22) Date of filing: 13.03.2026
(51) Int. Cl.: H01F 27/32, B23K 9/00, H01F 38/08

(54) **WELDING-TYPE MAIN TRANSFORMER WITH EDGE WINDING FOR OPTIMIZED CREEPAGE PERFORMANCE**

(30) Priority: 17.03.2025 US 202563773157 P; 04.03.2026 US 202619556544
(71) Applicant: Illinois Tool Works Inc., Glenview IL 60025 (US)
(72) Inventor: SIGL, Dennis, Glenview, 60025 (US)
(74) Representative: HGF

(57) **Abstract**

An example main transformer, configured for transforming an input voltage received from a main source into an output voltage for use within a welding-type system, may include a plurality of primary winding coils (202), and a plurality of secondary winding coils (204), with the plurality of primary winding coils and the plurality of secondary winding coils forming a plurality of primary-secondary pairs. Each primary-secondary pair may be configured to ensure that a creepage distance between the primary winding coil and the secondary winding coil is more than a predetermined minimal value. Each primary-secondary pair may include one primary winding coil and one secondary winding coil. Each primary-secondary pair may further includes a primary-core insulator (220) configured for isolating the primary-secondary pair from remaining components of the main transformer, and a primary-secondary (230) insulator configured for isolating the primary winding coil and the secondary winding coil within the primary-secondary pair.

## Description

### CLAIM OF PRIORITY

This patent application claims priority to and claims benefit from United States Provisional Patent Application Serial No. 63/773,157, filed on March 17, 2025. The above identified application is hereby incorporated herein by reference in its entirety.

### BACKGROUND

Welding has become increasingly ubiquitous. Welding may be performed in a manual manner (e.g., being performed by a human), or at least some aspects of it may be performed in an automated manner. Equipment or components used during welding operations may be driven using engines. For example, engines may be used to drive, for example, generators, power sources, etc. used during welding operations.

In some instances, conventional welding-type systems may have some limitations and/or disadvantages. For example, welding-type systems may have limitations with respect to handling power conversions, and devices used to provide such power conversions (e.g., main transformers), during welding operations.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for welding-type main transformer with edge winding for optimized creepage performance, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 shows an example welding-type setup.
Fig. 2 illustrates an example main transformer with enhanced insulation structure.
Fig. 3 illustrates a different view of an example main transformer with enhanced insulation structure, showing the bottom side thereof.
Figs. 4A-4B illustrate top and bottom views of an example main transformer with enhanced insulation structure.
Figs. 5A-5D illustrate different views of an example main transformer with enhanced insulation structure.
Fig. 6 illustrates a schematic chart of primary-secondary winding coil arrangement in an example main transformer with enhanced insulation structure.

### DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

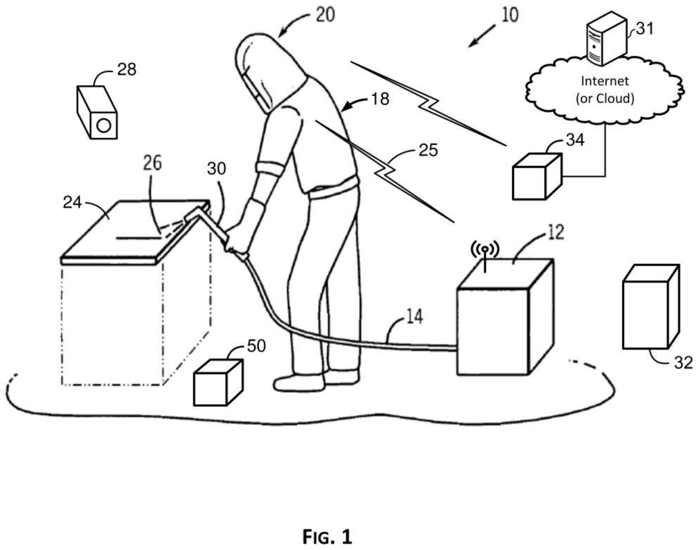

Fig. 1 shows an example welding-type setup. Referring to Fig. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and or satellite telematics hardware, for example.

Optionally in any implementation, welding-type systems or setups may incorporate a main transformer. The main transformer may be configured to convert an input voltage from a power source into output voltage that is suitable for use within the welding-type system or setup. In this regard, the main transform typically may be used to convert high-voltage input from the power source into low-voltage (but higher current) output required for welding. Main transformers are typically used in conjunction with AC welding-type systems or setups. Nonetheless, in some instances, Main transformers may be configured to enable operation in conjunction with DC welding-type systems or setups. In such cases, the main transformers may incorporate suitable components (e.g., rectifiers) to enable converting AC input into DC output. In various implementations the main transformer may comprise two main coils (or windings), primary and secondary coils, which may be configured to utilize electromagnetic induction to enable adjusting voltage (and current) levels to facilitate delivering the required voltage and/or current needed for welding operations. As shown in Fig. 1, the welding-type setup 10 comprises a main transformer 50, which may be configured to operate as described herein.

Solutions based on the present disclosure are directed to improved main transformers that meet performance requirements that may apply to main transformers, while mitigating and/or overcoming at least some of the limitations and/or disadvantages of conventional solutions. For example, existing main transformers typically may utilize specialized wires, which may be expensive and/or in limited supply (e.g., 1 square MW36A enameled magnet wires). Use of such specialized wires may be necessitated by, e.g., the need to meet various performance requirements, such as creepage distance between primary and secondary coils or windings (referred to herein after as "primary-secondary creepage distance.") Such primary-secondary creepage distance may need to have minimal value, which may vary based on the input voltage and/or the output voltage. For example, in various instances, main transformers may need to meet CSA requirements of 20 mm primary-secondary creepage distance, which allows for handling of input voltage of about 575V.

Main transformers implemented in accordance with the present disclosure incorporate improved designs, which meet (if not exceed) performance requirements applicable to such devices, while improving on existing designs, such as with respect to cost, ease of built, ease of use, and the like. In particular, the proposed improved designs may allow for use of cheaper and/or more readily available material and components (e.g., wires or the like), without compromising, if not even improving, performance compared to conventional main transformers. For example, in various embodiments based on the present disclosure an improved design may be used incorporating an enhanced insulation structure to ensure meeting performance requirements while using such cheaper and/or more readily components (e.g., MW60A, Nomex wrapped wires). Such enhanced insulation structure may comprise, and/or may be used in conjunction with an optimized arrangement and/or shaping of the primary and secondary coils. Example embodiments, and features and/or attributes associated therewith, are described in more detail below.

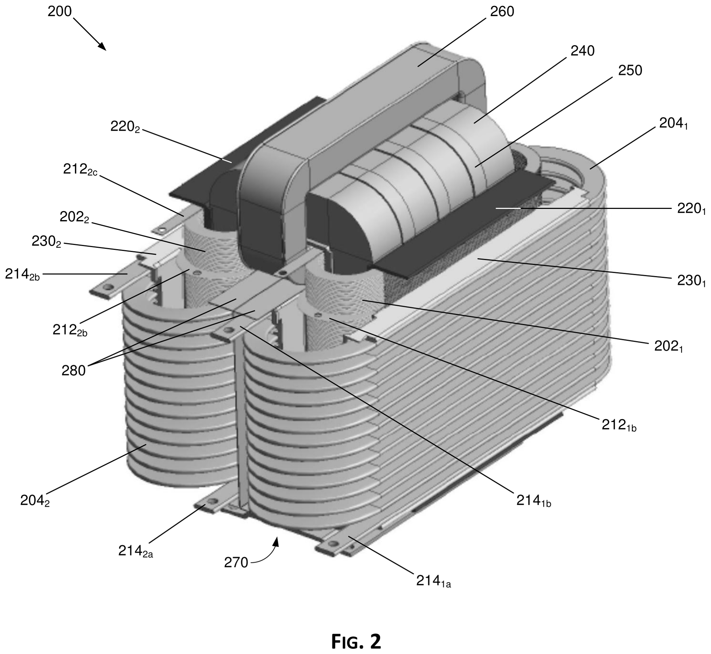

Fig. 2 illustrates an example main transformer with enhanced insulation structure. Shown in Fig. 2 is a main transformer 200.

The main transformer 200 may be configured for transforming an input voltage received from a main power source into an output voltage for use within the welding-type system or setup. For example, the main transformer 200 may correspond to the main transform 50 in the welding-type setup 10.

As illustrated in Fig. 2, the main transformer 200 incorporates an improved design implemented in accordance with an example embodiment based on the present disclosure. In particular, the main transformer 200 uses an improved winding coil structure that enables meeting performance requirements applicable to main transformers, while allowing for use of cheaper and more readily material and/or components. In addition, the improved design used in the main transformer 200 may allow for improved performance, such as by allowing for more flexible operation-e.g., with respect to input voltages that may be supported or handled.

In this regard, as shown in Fig. 2, the main transformer 200 comprises a plurality of primary winding coils 202; and a plurality of secondary winding coils 204. Each primary winding coil 202 may comprise a plurality of primary taps 212, which may be used in engaging connectors-e.g., to enable providing or applying the input voltage. Similarly, each secondary winding coil 204 may comprise a plurality of secondary taps 214, which may be used in engaging connectors-e.g., to enable providing or applying the output voltage.

The main transformer 200 may further comprise one or more cut cores 240. In this regard, each cut core 240 may be configured to engage at least two primary-secondary pairs. In some instances, one or more bands 250 may be used in holding and/or securing the cut cores 240.

The main transformer 200 may further comprise a tertiary and fan control component 260.

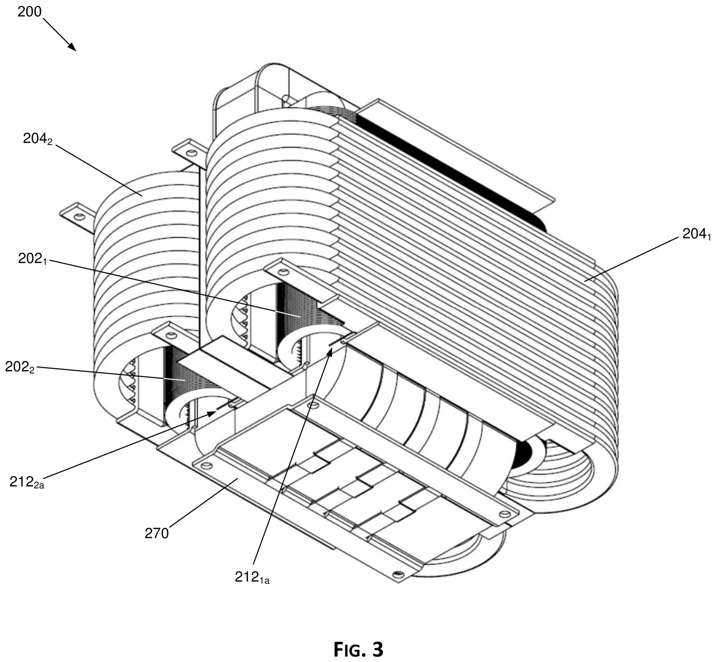

The main transformer 200 may further comprise a mounting plate 270 (shown more clearly in Fig. 3) configured to engage the one or more cut cores 240.

Further, in some instances, the main transformer 200 may further comprise a secondary-secondary insulator 280. In this regard, one secondary-secondary insulator 280 may be sufficient even though two secondary-secondary insulators 280 are used in the example implementation shown in Fig. 2.

The plurality of primary winding coils 202 and the plurality of secondary winding coils 204 may be arranged such that they form a plurality of primary-secondary pairs, with each primary-secondary pair comprising one primary winding coil 202 and one secondary winding coil 204. Each primary-secondary pair may further comprise a primary-core insulator 220 configured for isolating the primary-secondary pair from remaining components of the main transformer, and a primary-secondary insulator 230 configured for isolating the primary winding coil 202 and the secondary winding coil 204 within the primary-secondary pair.

In this regard, each of the primary-core insulator 220 and the primary-secondary insulator 230 may comprise suitable material for providing insulation between, respectively, the primary winding coil and the cut cores (for insulator 220) and the primary and the secondary winding coils (for insulator 230). The insulation provided maybe a function of both of the material used in the insulator and the shape and positioning of the pertinent components (primary winding coil 202, secondary winding coil 204, cut cores 240) relative to one another. This may allow for use of cheaper and more readily available material, for the insulators and/or the winding coils. For example, The primary-core insulator 220 and the primary-secondary insulator 230 may simply be made from plastic. The new design may eliminate need for lamination dies and enameled wires. In an example implementation, the primary-core insulator 220 comprises a primary-core comb, and the primary-secondary insulator 230 comprises a primary-secondary comb.

In the example non-limiting embodiment illustrated in Fig. 2, the main transformer 200 comprises two primary-secondary pairs, comprising two primary winding coils 202, and 202₂ and two secondary winding coils 204, and 204₂, cut core 240, and three bands 250. The main transformer 200 further comprises four primary-core insulators 220₁, 220₂, 220₃, and 220₄ and four primary-secondary insulators 230₁,230₂, 230₃, and 230₄ for use in the two primary-secondary pairs.

Each of the primary winding coils 202, and 202₂ comprises 3 primary taps-identified in Fig. 2 (and Fig. 3) as primary taps 212₁, 212_{1b}, and 212_{1c} for the primary winding coil 202₁, and primary taps 212₂ₐ, 212_{2b}, and 212_{2c} for the primary winding coil 202₂. Each of the secondary winding coils 204, and 204₂ comprises 2 secondary taps-identified in Fig. 2 as secondary taps 214₁ₐ and 214_{1b} for the secondary winding coil 204₁, and secondary taps 214₂ₐ and 214_{2b} for the secondary winding coil 204₂. the primary-core insulator 220 and the primary-secondary insulator 230.

In accordance with the present disclosure, each primary-secondary pair is configured to ensure that a creepage distance between the primary winding coil 202 and the secondary winding coil 204 is more than a predetermined minimal value. In this regard, as noted the shaping of the primary and secondary winding coils, and/or the positioning and material used in the primary-core insulator and the primary-secondary insulator ensure meeting applicable performance requirements, including minimum creepage distance requirements as described herein. Some of these features and aspects are illustrated and described in more detail below.

Fig. 3 illustrates a different view of an example main transformer with enhanced insulation structure, showing the bottom side thereof. Shown in Fig. 3 is the main transformer 200 of Fig. 2. In particular, the main transformer 200 is shown in Fig. 3 as viewed from a different perspective-namely, as viewed from the bottom and at an angle.

In this regard, illustrated in Fig. 3 is the bottom side of main transformer 200, showing in particular the mounting plate 270. As illustrated in Fig. 3, the mounting plate engages the cut core 240 and the bands 250 to securely hold the core and thus the primary-secondary pairs in place, as shown.

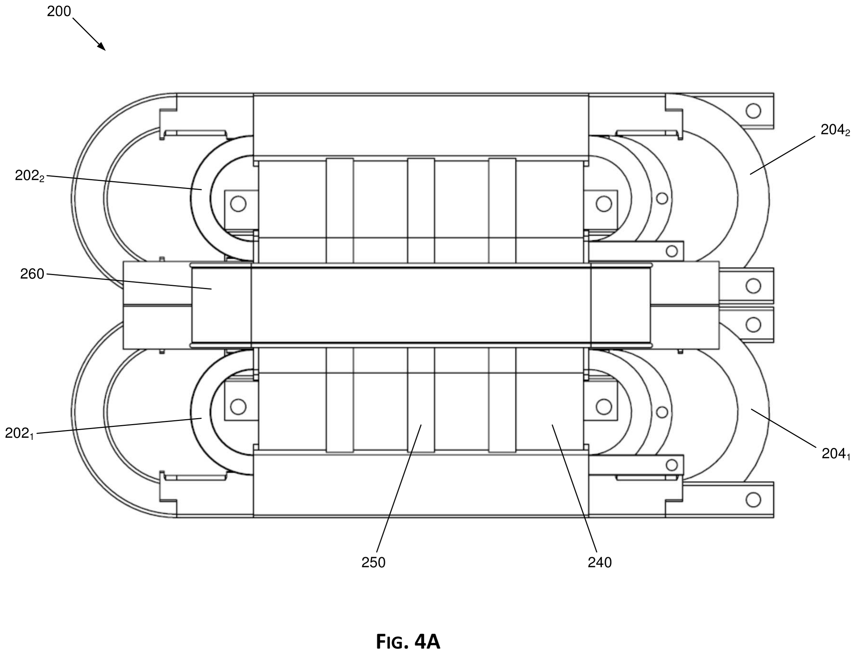

Figs. 4A-4B illustrate top and bottom views of an example main transformer with enhanced insulation structure. Shown in Figs. 4A-4B are top view and bottom view of the main transformer 200 of Fig. 2. In particular, the main transformer 200 is shown in Figs. 4A-4B as viewed from the top and the bottom.

In this regard, illustrated in Fig. 4A is the main transformer 200 as viewed directly from the top, showing various components thereof-e.g., the two primary winding coils 202, and 202₂, the two secondary winding coils 204, and 204₂, the cut core 240, the bands 250, and the tertiary and fan control component 260.

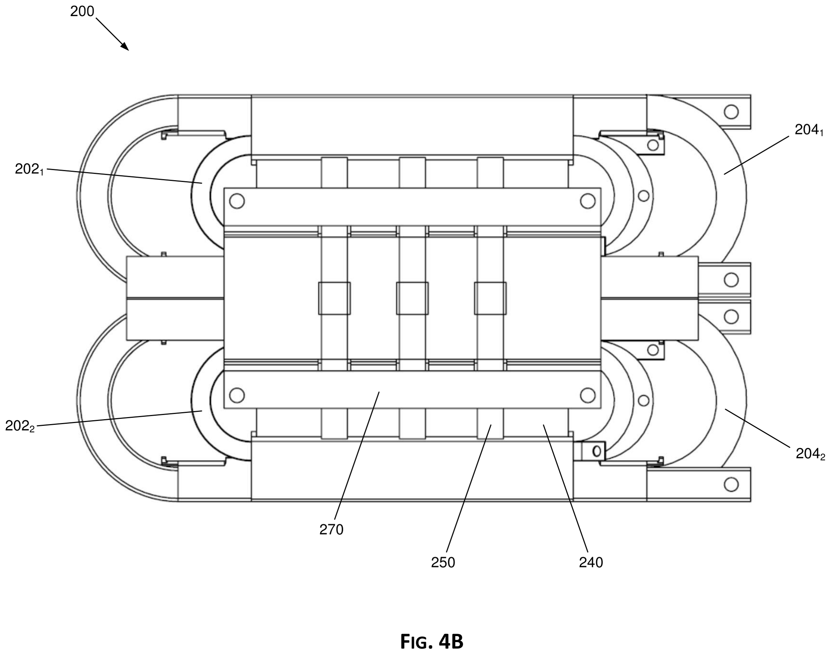

Illustrated in Fig. 4B is the main transformer 200 as viewed directly from the bottom, showing various components thereof-e.g., the two primary winding coils 202, and 202₂, the two secondary winding coils 204, and 204₂, the cut core 240, the bands 250, and the mounting plate 270.

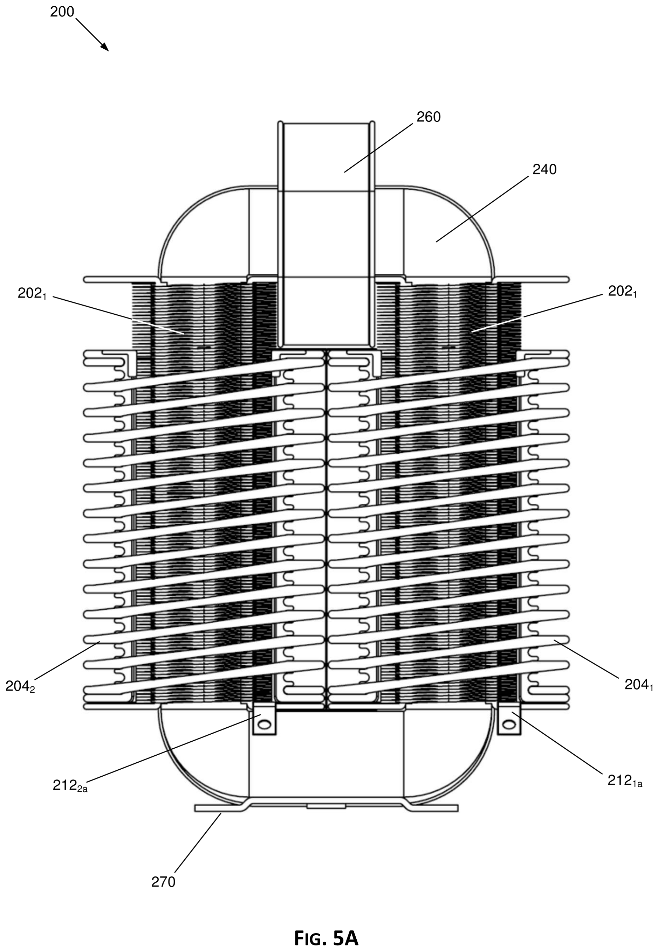

Figs. 5A-5D illustrate different views of an example main transformer with enhanced insulation structure. Shown in Figs. 5A-5D are different illustrative views of the main transformer 200 of Fig. 2, including cutoff views, showing more details of the main transformer 200 and the various components thereof-namely, the primary winding coils 202, and 202₂, the two secondary winding coils 204, and 204₂, the cut core 240, the bands 250, the tertiary and fan control component 260, and the mounting plate 270.

In particular, illustrated in Figs. 5A-5D are details relating to the shaping and the relative positioning of these components. In this regard, as noted, the shaping and/or relative positioning of the primary winding coils 202, and 202₂, the secondary winding coils 204, and 204₂, as well as the insulators (and the material used therein) may be adaptively set or adjusted to optimize performance as described herein.

For example, shown in Fig. 5A is the main transformer 200 as viewed directly from the front, showing various components thereof-e.g., the two primary winding coils 202, and 202₂, the two secondary winding coils 204, and 204₂, the cut core 240, the bands 250, and the tertiary and fan control component 260.

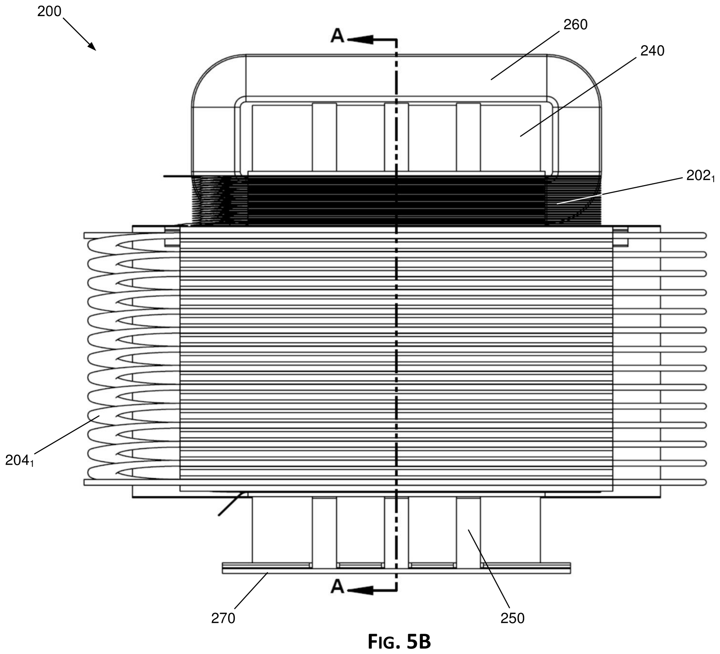

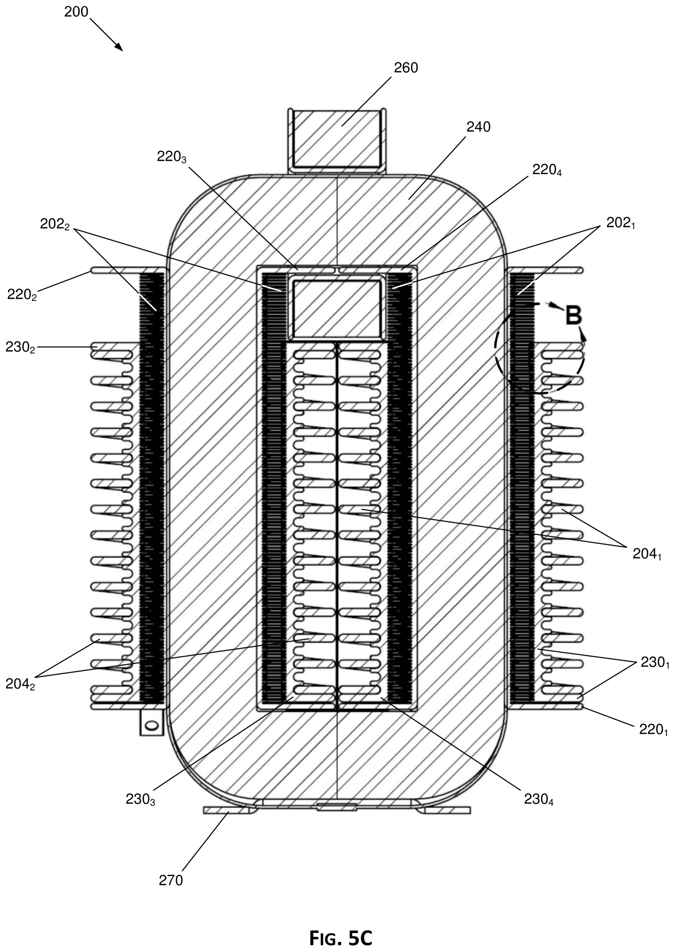

Shown in Fig. 5B is the main transformer 200 as viewed directly from the side, showing various components thereof-e.g., the first primary winding coil 202₁, the first secondary winding coil 204₁, the cut core 240, the tertiary and fan control component 260, and the mounting plate 270. Also shown in Fig. 5B is cutout (cross-section) plane A-A, with cutout views shown in more detail in Fig. 5C.

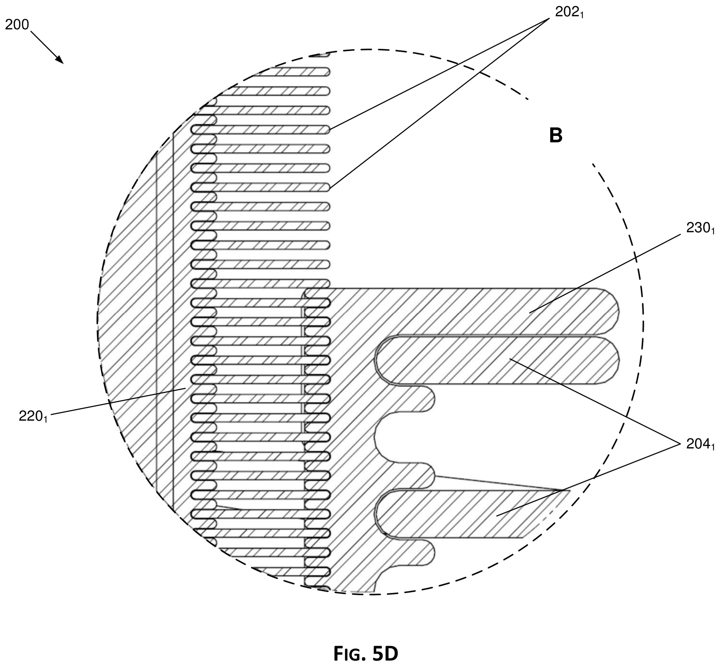

Shown in Fig. 5C is a cutout view of the main transformer 200 at the cutout plane A-A (as indicated in Fig. 5B), as viewed directly from the front (that is, similar to Fig. 5A), showing details of various components thereof. In particular, shown in Fig. 5C is inside details of the cut cores 240, as well as spacing between the primary winding coils and the secondary winding coil within the same primary-secondary pair, and between winding coils of different pairs. Also shown are details relating to the primary-core insulator and the primary-secondary insulators within the primary-secondary pairs. Also shown in Fig. 5C is area B, which is shown enlarged (thus showing more details) in Fig. 5D.

Shown in Fig. 5D is area B comprising a section of the first primary-secondary pair in the main transformer 200, illustrating more details relating to the primary winding coil 202₁, the secondary winding coil 204₁, the primary-core insulator 220₁, and the primary-secondary insulator 230₁. In particular, illustrated in Fig. 5D are details relating to the shape and relative positioning of each of these elements, which may be adaptively set or adjusted to optimize performance, as described herein.

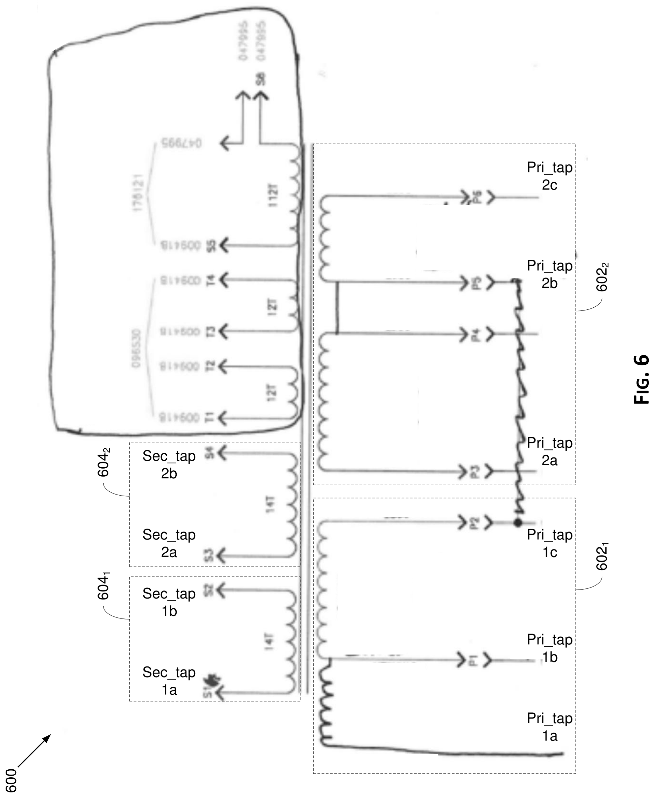

Fig. 6 illustrates a schematic chart of primary-secondary winding coil arrangement in an example main transformer with enhanced insulation structure. Shown in Fig. 6 is schematic of a primary-secondary winding coil arrangement 600 comprising primary winding coils and secondary winding coils, which may be used in a main transformer incorporating an enhanced design based on the present disclosure.

As shown in Fig. 6, the primary-secondary winding coil arrangement 600 comprises a plurality of primary winding coils 602ᵢ (of which first primary winding coil 602, and second primary winding coil 602₂ are shown) and a plurality of secondary winding coils 604ᵢ (of which first secondary winding coil 604, and second secondary winding coil 604₂ are shown.

Each primary winding coil 602ᵢ may comprise a plurality of primary taps, which may be used in engaging connectors-e.g., to enable providing or applying the input voltage. Similarly, each secondary winding coil 604ᵢ may comprise a plurality of secondary taps, which may be used in engaging connectors-e.g., to enable providing or applying the output voltage. For example, as illustrated in Fig. 6, in the primary-secondary winding coil arrangement 600, each of the primary winding coils 602, and 602₂ comprises 3 primary taps-identified in Fig. 6 as primary taps Pri_tap₁ₐ, Pri_tap_{1b}, and Pri_tap_{1c} for the primary winding coil 602₁, and primary taps Pri_tap₂ₐ, Pri_tap_{2b}, and Pri_tap_{2c} for the primary winding coil 602₂. Each of the secondary winding coils 604, and 604₂ comprises 2 secondary taps-identified in Fig. 6 as secondary taps Sec_tap₁ₐ, Sec_tap_{1b}, and Sec_tap_{1c} for the secondary winding coil 602₁, and secondary taps Sec_tap₂ₐ, Sec_tap_{2b}, and Sec_tap_{2c} for the secondary winding coil 602₂.

As noted above, the use of multiple taps in the primary and secondary winding coils in the main transformer may allow for improved performance, such as by allowing for handling of different input voltages and/or output voltages, etc. In this regard, by connecting to different taps from the available ones within the winding coils, by itself or in combination with adaptive connections across multiple coils, the value of the input voltage (or output voltage, when done at the secondary side) may be adjusted. For example, with reference to the primary-secondary winding coil arrangement 600 as shown in Fig. 6, on the primary side, a first input voltage (e.g., 240V) may be handled by connecting input connectors onto primary taps Pri_tap₁ₐ and Pri_tap_{1,b} in the primary winding coil 602₁, which are then connected in parallel with primary taps Pri_tap₂ₐ and Pri_tap_{2b} in the primary winding coil 602₂. A second input voltage (e.g., 480V) may be handled by connecting input connectors onto primary taps Pri_tap₁ₐ and Pritap_{1b} in the primary winding coil 602₁, which are then connected in series with primary taps Pri_tap₂ₐ and Pri_tap_{2b} in the primary winding coil 602₂. A third input voltage (e.g., 575V) may be handled by connecting input connectors onto primary taps Pri_tap₁ₐ and Pri_tap_{1c}, in the primary winding coil 602₁ which are then connected in series with primary taps Pri_tap₂ₐ and Pri_tap_{2c} in the primary winding coil 602₂.

Accordingly, main transformers implemented in accordance with the present disclosure may have various advantages compared to existing solutions. For example, main transformers based on the present disclosure may achieve improved creepage performance-e.g., achieve 20 mm of primary-secondary creepage distance over 1.5 mm of insulation. These main transformers may also be implemented using low-cost bare conductors. Further, the main transformers, and particularly the coil structure used therein, may offer enhanced cooling, which may allow for use of less conductor compared to existing single coil designs. The proposed improved designs may allow for omitting of certain components and/or features-e.g., no crimping lugs, or wire stripping, or form and pierce needed to make connections. Further, no welding of the core may be needed, as the cut cores may be held together with straps or long hose clamps, which may lower losses. Another advantage is that with the proposed improved designs there may be a lot of surface area with no magnet wire insulation or insulation papers between the conductors and the cooling air, which may allow for using less conductor. The proposed improved designs may also allow for optimizing material cost easily, such as by changing the cut core cross section. In this regard, since the cut cores are cut from strip in a continuous process, the tooling may be very low cost. This may allow for perfect proportion of steel to mean length of turn to optimize cost. The proposed improved designs may also allow for less time to wind as there may not be any need to install insulating papers with a lot of complex taping and bending operations. Also, with the proposed improved designs no wedges are needed-rather, it may be possible to wind coil directly on core halves. Another advantage is that no loose piece laminations are needed with the proposed improved designs, as the cut cores may come in two portions (e.g., halves), and may be epoxy bonded, with the gap polished by the cutting tool used. Further, with the proposed improved designs the tertiary and fan windings may be wound on a separate bobbin, and as such simpler to install. Finally, with the proposed improved designs form factor may be changed easily to fit into the unit, whereas with existing designs machine stamped laminations are typically used, and there are not many in that larger size to pick from, and tooling new ones may be very expensive.

An example welding-type system, in accordance with the present disclosure, comprises a main transformer configured for transforming an input voltage received from a main source into an output voltage for use within the welding-type system, wherein the main transformer comprises: a plurality of primary winding coils; and a plurality of secondary winding coils; wherein the plurality of primary winding coils and the plurality of secondary winding coils form a plurality of primary-secondary pairs, wherein each primary-secondary pair comprises one primary winding coil and one secondary winding coil, wherein each primary-secondary pair further comprises a primary-core insulator configured for isolating the primary-secondary pair from remaining components of the main transformer, and a primary-secondary insulator configured for isolating the primary winding coil and the secondary winding coil within the primary-secondary pair, and wherein each primary-secondary pair is configured to ensure that a creepage distance between the primary winding coil and the secondary winding coil is more than a predetermined minimal value.

In an example embodiment, the main transformer further comprises one or more cut cores.

In an example embodiment, each cut core is configured to engage at least two primary-secondary pairs.

In an example embodiment, the main transformer further comprises a mounting plate configured to engage the one or more cut cores.

In an example embodiment, at least one primary winding coil comprises a plurality of portions, and wherein the plurality of portions are configured to enable handling a plurality of different input voltages via the at least one primary winding coil.

In an example embodiment, each of the plurality of portions comprises a connection tap for enabling selectively engaging a subset of the plurality of portions to handling particular one of the plurality of different input voltages.

In an example embodiment, one or both of the plurality of primary winding coils and the plurality of secondary winding coils comprise bare conductor wires.

In an example embodiment, at least one coil of the plurality of primary winding coils and the plurality of secondary winding coils comprises MW60A Nomex wrapped wires.

In an example embodiment, the output voltage is lower than the input voltage.

In an example embodiment, the input voltage is 115V, 230V, 380V, 400V, 415V,460V, or 575V.

In an example embodiment, the output voltage is 80V or 300V.

In an example embodiment, the minimal value is determined based on the input voltage.

In an example embodiment, the main transformer is configured to provide 20 mm of primary-secondary creepage distance over 1.5 mm of insulation.

In an example embodiment, the main transformer is configured to handle input voltage of 575V when providing the 20 mm of primary-secondary creepage distance.

In an example embodiment, the main transformer is configured to provide 4.8 mm of primary-secondary creepage distance over 1.5 mm of insulation.

In an example embodiment, the main transformer is configured to handle input voltage of 115V when providing the 4.8 mm of primary-secondary creepage distance.

In an example embodiment, the primary-core insulator comprises a primary-core comb.

In an example embodiment, the primary-secondary insulator comprises a primary-secondary comb.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.
Certain embodiments of the invention are described in the following clauses:
Clause 1 A welding-type system, comprising:
   a main transformer configured for transforming an input voltage received from a main source into an output voltage for use within the welding-type system, wherein the main transformer comprises:
      a plurality of primary winding coils; and
      a plurality of secondary winding coils;
   wherein the plurality of primary winding coils and the plurality of secondary winding coils form a plurality of primary-secondary pairs,
   wherein each primary-secondary pair comprises one primary winding coil and one secondary winding coil,
   wherein each primary-secondary pair further comprises a primary-core insulator configured for isolating the primary-secondary pair from remaining components of the main transformer, and a primary-secondary insulator configured for isolating the primary winding coil and the secondary winding coil within the primary-secondary pair, and
   wherein each primary-secondary pair is configured to ensure that a creepage distance between the primary winding coil and the secondary winding coil is more than a predetermined minimal value.
Clause 2 The welding-type system according to clause 1, wherein the main transformer further comprises one or more cut cores.
Cause 3 The welding-type system according to clause 2, wherein each cut core is configured to engage at least two primary-secondary pairs.
Clause 4 The welding-type system according to clause 2, wherein the main transformer further comprises a mounting plate configured to engage the one or more cut cores.
Clause 5 The welding-type system according to clause 1, wherein at least one primary winding coil comprises a plurality of portions, and wherein the plurality of portions are configured to enable handling a plurality of different input voltages via the at least one primary winding coil.
Clause 6 The welding-type system according to clause 5, wherein each of the plurality of portions comprises a connection tap for enabling selectively engaging a subset of the plurality of portions to handling particular one of the plurality of different input voltages.
Clause 7 The welding-type system according to clause 1, wherein one or both of the plurality of primary winding coils and the plurality of secondary winding coils comprise bare conductor wires.
Clause 8 The welding-type system according to clause 1, wherein at least one coil of the plurality of primary winding coils and the plurality of secondary winding coils comprises MW60A Nomex wrapped wires.
Clause 9 The welding-type system according to clause 1, wherein the output voltage is lower than the input voltage.
Clause 10 The welding-type system according to clause 1, wherein the input voltage is 115V, 230V, 380V, 400V, 415V, 460V, or 575V.
Clause 11 The welding-type system according to clause 1, wherein the output voltage is 80V or 300V.
Clause 12 The welding-type system according to clause 1, wherein the minimal value is determined based on the input voltage.
Clause 13 The welding-type system according to clause 1, wherein the main transformer is configured to provide 20 mm of primary-secondary creepage distance over 1.5 mm of insulation.
Clause 14 The welding-type system according to clause 13, wherein the main transformer is configured to handle input voltage of 575V when providing the 20 mm of primary-secondary creepage distance.
Clause 15 The welding-type system according to claim 1, wherein the main transformer is configured to provide 4.8 mm of primary-secondary creepage distance over 1.5 mm of insulation.
Clause 16 The welding-type system according to clause 15, wherein the main transformer is configured to handle input voltage of 115V when providing the 4.8 mm of primary-secondary creepage distance.
Clause 17 The welding-type system according to clause 1, wherein the primary-core insulator comprises a primary-core comb.
Clause 18 The welding-type system according to clause 1, wherein the primary-secondary insulator comprises a primary-secondary comb.

## Claims

1. A welding-type system, comprising:
a main transformer configured for transforming an input voltage received from a main source into an output voltage for use within the welding-type system, wherein the main transformer comprises:
a plurality of primary winding coils; and
a plurality of secondary winding coils;
wherein the plurality of primary winding coils and the plurality of secondary winding coils form a plurality of primary-secondary pairs,
wherein each primary-secondary pair comprises one primary winding coil and one secondary winding coil,
wherein each primary-secondary pair further comprises a primary-core insulator configured for isolating the primary-secondary pair from remaining components of the main transformer, and a primary-secondary insulator configured for isolating the primary winding coil and the secondary winding coil within the primary-secondary pair, and
wherein each primary-secondary pair is configured to ensure that a creepage distance between the primary winding coil and the secondary winding coil is more than a predetermined minimal value.

2. The welding-type system according to claim 1, wherein the main transformer further comprises one or more cut cores.

3. The welding-type system according to claim 2, wherein each cut core is configured to engage at least two primary-secondary pairs.

4. The welding-type system according to claim 2, wherein the main transformer further comprises a mounting plate configured to engage the one or more cut cores.

5. The welding-type system according to claim 1, wherein at least one primary winding coil comprises a plurality of portions, and wherein the plurality of portions are configured to enable handling a plurality of different input voltages via the at least one primary winding coil.

6. The welding-type system according to claim 5, wherein each of the plurality of portions comprises a connection tap for enabling selectively engaging a subset of the plurality of portions to handling particular one of the plurality of different input voltages.

7. The welding-type system according to claim 1, wherein one or both of the plurality of primary winding coils and the plurality of secondary winding coils comprise bare conductor wires.

8. The welding-type system according to claim 1, wherein at least one coil of the plurality of primary winding coils and the plurality of secondary winding coils comprises MW60A Nomex wrapped wires.

9. The welding-type system according to claim 1, wherein the output voltage is lower than the input voltage.

10. The welding-type system according to claim 1, wherein the input voltage is 115V, 230V, 380V, 400V, 415V, 460V, or 575V or
wherein the output voltage is 80V or 300V.

11. The welding-type system according to claim 1, wherein the minimal value is determined based on the input voltage.

12. The welding-type system according to claim 1, wherein the main transformer is configured to provide 20 mm of primary-secondary creepage distance over 1.5 mm of insulation.

13. The welding-type system according to claim 12, wherein the main transformer is configured to handle input voltage of 575V when providing the 20 mm of primary-secondary creepage distance.

14. The welding-type system according to claim 1, wherein the main transformer is configured to provide 4.8 mm of primary-secondary creepage distance over 1.5 mm of insulation, and optionally
wherein the main transformer is configured to handle input voltage of 115V when providing the 4.8 mm of primary-secondary creepage distance.

15. The welding-type system according to claim 1, wherein the primary-core insulator comprises a primary-core comb or
wherein the primary-secondary insulator comprises a primary-secondary comb.
